# EUROPEAN PATENT APPLICATION

(11) **EP 4 516 538 A1**
(43) Date of publication of application: **05.03.2025**
(21) Application number: 23795016.7
(22) Date of filing: 11.04.2023
(51) Int. Cl.: B60H 1/00, B60H 1/06, B60H 1/14, B60H 1/22, B60H 1/32, H01M 10/613, H01M 10/615, H01M 10/625, H01M 10/663

(54) **INTEGRATED MODULE FOR VEHICLE THERMAL MANAGEMENT SYSTEM, VEHICLE THERMAL MANAGEMENT SYSTEM, AND VEHICLE**

(30) Priority: 28.04.2022 CN 202210471408
(71) Applicant: BYD Company Limited, Shenzhen, Guangdong 518118 (CN)
(72) Inventor: YANG, Dongsheng, Shenzhen, Guangdong 518118 (CN); BAI, Yunhui, Shenzhen, Guangdong 518118 (CN); ZHANG, Junyan, Shenzhen, Guangdong 518118 (CN); ZHAO, Shangzhong, Shenzhen, Guangdong 518118 (CN); PENG, Yicheng, Shenzhen, Guangdong 518118 (CN)
(74) Representative: Taor, Simon Edward William
(86) International application number: PCT/CN2023/087695
(87) International publication number: WO 2023/207583

(57) **Abstract**

Disclosed are an integrated module (1000) for a vehicle thermal management system (2000), the vehicle thermal management system (2000), and a vehicle. The integrated module (1000) comprises a body (100), a plurality of interfaces, and a valve set (300); the plurality of interfaces are provided on the body (100) to be communicated with corresponding flow channels (200) in the body (100); among the plurality of interfaces, an indoor condenser outlet interface (105) is connected to a first interface (101) by means of the flow channel (200), a second interface (102) is connected to a battery heat exchanger first opening interface (109) by means of the flow channel (200), and a battery heat exchanger second opening interface (110) is connected to a compressor inlet interface (106) by means of the flow channel (200); a battery heat exchanger (17) is configured to be able to exchange heat with battery coolant circuits (L1) in which a battery (21) and an engine (27) are respectively located; the valve set (300) is provided on the body (100) and comprises a first expansion valve (16) provided on the flow channel (200) between the second interface (102) and the battery heat exchanger first opening interface (109).

## Description

### CROSS-REFERENCE TO RELATED APPLICATIONS

The present disclosure claims priority to and benefits of Chinese Patent Application No. 202210471408.1, filed on April 28, 2022. The entire content of the above-referenced application is incorporated herein by reference.

### BACKGROUND

A thermal management system is an important component of a vehicle, and can change a temperature environment in the vehicle, so that a driver and a passenger obtain good driving and riding experience. In a related art, thermal management devices such as a compressor, an indoor heat exchanger, and an outdoor heat exchanger in the thermal management system are connected through pipelines, and electronic expansion valves, switch valves, and the like are scatteredly distributed on the pipelines. The design has technical defects such as complex pipeline arrangement, high space occupation, difficult maintenance, difficult assembly, and time-consuming assembly.

### SUMMARY

An objective of the present disclosure is to provide an integrated module for a vehicle thermal management system, a vehicle thermal management system, and a vehicle. The integrated module can simplify a structure of a thermal management system of a vehicle, reduce a space occupied by the thermal management system, and reduce costs and assembly difficulty; and can improve a utilization rate of heat energy in the thermal management system, thereby achieving energy saving.

To achieve the foregoing objective, the present disclosure provides an integrated module for a vehicle thermal management system. The integrated module includes a body, a number of interfaces, and a valve set.

At least one flow channel is provided in the body.

The number of interfaces are provided on the body to be in communication with corresponding flow channels, and configured to connect to corresponding thermal management devices in a thermal management system. The number of interfaces include an indoor condenser outlet interface, a first interface, a second interface, a battery heat exchanger first opening interface, a battery heat exchanger second opening interface, and a compressor inlet interface. The indoor condenser outlet interface is connected to the first interface through a flow channel. The second interface is connected to the battery heat exchanger first opening interface through a flow channel. The battery heat exchanger second opening interface is connected to the compressor inlet interface through a flow channel.

A battery heat exchanger is configured to exchange heat with a battery coolant circuit in which a battery is located, and the battery coolant circuit is configured to exchange heat with an engine coolant circuit in which an engine is located. In addition,

the valve set is arranged on the body. The valve set includes a first expansion valve. The first expansion valve is arranged on the flow channel between the second interface and the battery heat exchanger first opening interface, to cause the first expansion valve to throttle and depressurize a refrigerant from the second interface.

In an embodiment, the integrated module further includes the battery heat exchanger. The battery heat exchanger is arranged on the body. The battery heat exchanger further includes a battery heat exchanger third opening and a battery heat exchanger fourth opening. The battery heat exchanger third opening and the battery heat exchanger fourth opening are respectively configured to connect to the battery coolant circuit.

In an embodiment, the number of interfaces further include an outdoor heat exchanger first opening interface and an outdoor heat exchanger second opening interface. The indoor condenser outlet interface is connected to the first interface through the flow channel. The indoor condenser outlet interface is connected to the outdoor heat exchanger first opening interface through a flow channel.

The valve set further includes a first switch valve and a second switch valve.

The first switch valve is located on the flow channel between the indoor condenser outlet interface and the first interface.

The second switch valve is located on the flow channel between the indoor condenser outlet interface and the outdoor heat exchanger first opening interface.

In an embodiment, the interfaces further include a third interface. The third interface is connected to the second interface through a flow channel.

The third interface is configured to connect to a first port of a second expansion valve. A second port of the second expansion valve is connected to a refrigerant inlet of an indoor evaporator.

The valve set further includes a third switch valve. The third switch valve is arranged on the flow channel between the second interface and the third interface.

In an embodiment, the valve set further includes the second expansion valve. The first port of the second expansion valve is connected to the third interface. The second port of the second expansion valve is configured to connect to the refrigerant inlet of the indoor evaporator.

In an embodiment, the interfaces further include a fourth interface. The fourth interface is connected to the second interface through a flow channel.

The fourth interface is configured to connect to a first port of a third expansion valve. A second port of the third expansion valve is connected to the outdoor heat exchanger second opening interface.

The valve set further includes a fourth switch valve. The fourth switch valve is arranged on a flow channel between the second switch valve and the compressor inlet interface.

In an embodiment, the integrated module further includes a pressure sensor. A fifth interface is further provided on the body. A detection end of the pressure sensor extends into the fifth interface, to detect a pressure of a refrigerant entering the integrated module through the indoor condenser outlet interface.

In addition/alternatively, the integrated module further includes a pressure-temperature sensor. A sixth interface is further provided on the body. A detection end of the pressure-temperature sensor extends into the sixth interface, to detect a pressure and a temperature of a refrigerant entering the integrated module through the battery heat exchanger second opening interface.

In an embodiment, the body has a top surface, a bottom surface, and a side surface connected between the top surface and the bottom surface. The valve set is arranged on the top surface. The number of interfaces are provided on the side surface and the bottom surface. The bottom surface is used for mounting the battery heat exchanger.

In an embodiment, the body has a top surface, a bottom surface, and a side surface connected between the top surface and the bottom surface. The valve set is arranged on the top surface. The number of interfaces are provided on the side surface and the bottom surface. The bottom surface is used for mounting the battery heat exchanger.

The side surface includes a first side surface, a second side surface, a third side surface, and a fourth side surface that are connected to form an annular structure. The indoor condenser outlet interface is provided on the first side surface. The outdoor heat exchanger first opening interface is provided on the second side surface. The outdoor heat exchanger second opening interface, the first interface, and the fourth interface are provided on the third side surface. The second interface, the third interface, and the compressor inlet interface are provided on the fourth side surface.

**In** an embodiment, the top surface is provided with a first jack and a second jack both extending toward the bottom surface. The first jack is configured to insert the first switch valve. The second jack is configured to mount the second switch valve.

The first jack and the second jack are arranged spaced away along a first direction. The indoor condenser outlet interface is in communication with the first jack and the second jack respectively through a same first flow channel segment extending along the first direction.

The first direction is a direction of a connection line between the first side surface and the third side surface.

A flow channel between the outdoor heat exchanger first opening interface and the compressor inlet interface includes at least a second flow channel segment extending along a second direction. The compressor inlet interface is located at an upper end of the second flow channel segment.

The second direction is a direction of a connection line between the top surface and the bottom surface. Optionally, compared with a center of a connection line between the second side surface and the fourth side surface, the first flow channel segment is closer to the second side surface, and the second flow channel segment is closer to the fourth side surface.

In an embodiment, connections among the number of flow channels are configured as smooth transitions.

According to another aspect of the present disclosure, a vehicle thermal management system is provided. The vehicle thermal management system includes a compressor, an indoor condenser, and the foregoing integrated module. A refrigerant outlet of the compressor is connected to a refrigerant inlet of the indoor condenser. A refrigerant outlet of the indoor condenser is connected to the indoor condenser outlet interface. A refrigerant inlet of the compressor is connected to the compressor inlet interface.

In an embodiment, the vehicle thermal management system further includes an outdoor heat exchanger.

A first opening of the outdoor heat exchanger is connected to the refrigerant outlet of the indoor condenser through a flow channel of the integrated module, or the first opening of the outdoor heat exchanger is connected to the refrigerant inlet of the compressor through a flow channel of the integrated module.

A second opening of the outdoor heat exchanger is connected to the first interface.

In an embodiment, the vehicle thermal management system further includes a coaxial tube.

The coaxial tube includes an inner tube and an outer tube sleeved mutually. An inner space of the inner tube defines a first channel. A space between the inner tube and the outer tube defines a second channel. The first channel and the second channel are configured to cause a temperature of a refrigerant flowing through the first channel to be higher than a temperature of a refrigerant flowing through the second channel.

A refrigerant inlet of the first channel is connected to the second opening of the outdoor heat exchanger through a flow channel of the integrated module, or the refrigerant inlet of the first channel is connected to the refrigerant outlet of the indoor condenser through a flow channel of the integrated module. A refrigerant outlet of the first channel is connected to the second interface. A refrigerant inlet of the second channel is connected to the compressor inlet interface. A refrigerant outlet of the second channel is connected to the refrigerant inlet of the compressor.

In an embodiment, the vehicle thermal management system further includes the engine, the battery coolant circuit, a first pump, the battery, and a first heat exchanger.

A first end and a second end of the battery coolant circuit are respectively connected to the battery heat exchanger third opening and the battery heat exchanger fourth opening. The first pump, the battery, and the first heat exchanger are connected in series on the battery coolant circuit.

The first heat exchanger is configured to exchange heat with the engine coolant circuit.

In an embodiment, the vehicle thermal management system further includes a short circuit branch and a three-way valve.

A first port and a second port of the three-way valve are connected between the first pump and the battery. A third port of the three-way valve is connected to a flow path between the battery and the first heat exchanger through the short circuit branch.

In an embodiment, the engine coolant circuit includes a first circuit and a second circuit. The vehicle thermal management system further includes a heater core, a PTC, a second pump, and a four-way valve.

A first end and a second end of the first circuit are respectively connected to two ports of the first heat exchanger. The heater core, the PTC, the second pump, and the four-way valve are connected in series on the first circuit.

The engine is arranged on the second circuit. A first end and a second end of the second circuit are respectively connected to other two ports of the four-way valve.

According to still another aspect of the present disclosure, a vehicle is provided. The vehicle includes the foregoing vehicle thermal management system.

In the integrated module provided in the present disclosure, interfaces connected to thermal management devices are provided on a body, and flow channels are provided in the body to replace existing connection pipelines, so that a quantity of connection pipelines in a thermal management system can be reduced, and the thermal management system can be simplified. A valve set is integrated on the body, so that a quantity of supports for mounting valves can be effectively reduced when maintenance and disassembly are facilitated. In addition, the design of the flow channels in the body can also reduce weight of the integrated module, thereby facilitating lightweight design of an entire vehicle, and reducing costs and fuel consumption. In addition, use of components is reduced, so that an arrangement space of the entire vehicle can also be reduced. In addition, in the present disclosure, the flow channels may be flexibly designed on the body of the integrated module, so that arrangement positions of the valves may also be flexibly selected, to adapt to different entire vehicle arrangement, thereby facilitating platform design of the entire vehicle. In other words, in the present disclosure, through the foregoing solutions, the thermal management devices can be systematically integrated, thereby facilitating integration of the thermal management system. In this way, the vehicle thermal management system can be simplified overall, costs can be reduced, and the vehicle thermal management system can also be easy to assemble.

In addition, a battery heat exchanger is arranged, so that an air conditioning system in which a compressor is located can exchange heat with a battery or the like of the vehicle, to heat or cool the battery. In addition, the air conditioning system in which the compressor is located and the battery can exchange heat with a flow path in which an engine is located, so that waste heat of the engine can be utilized, thereby improving a utilization rate of energy of the vehicle thermal management system, and achieving energy saving.

In addition to implementing a thermal management mode of the battery, when the foregoing integrated module is applied to the vehicle thermal management system, the integrated module is connected to other heat exchange devices in the thermal management system, so that other preset thermal management modes can be implemented.

In addition, in the present disclosure, a blower or a fan may be used in cooperation to directly blow heat released by an indoor condenser to a riding room, to improve utilization efficiency of the heat.

Other features and advantages of the present disclosure will be described in detail in the following detailed implementations.

### BRIEF DESCRIPTION OF THE DRAWINGS

The drawings are provided to further understand the present disclosure, and constitute a part of this specification. The drawings, along with the specific implementations, are used to explain the present disclosure, and pose no limitation on the present disclosure. In the drawings:
FIG. 1 is a schematic structural diagram of a vehicle thermal management system according to an implementation of the present disclosure;
FIG. 2 is a schematic three-dimensional diagram of an integrated module according to an implementation of the present disclosure;
FIG. 3 is a schematic exploded view of an integrated module according to an implementation of the present disclosure;
FIG. 4 is a schematic three-dimensional diagram of an integrated module from another perspective according to an implementation of the present disclosure;
FIG. 5 is a schematic diagram of arrangement of flow channels in a body of an integrated module according to an implementation of the present disclosure, where it should be noted that, the figure shows the flow channels and parts defining the flow channels on the body, where internal channels of the parts are the flow channels; and also shows jacks configured to insert corresponding valves;
FIG. 6 is a schematic three-dimensional diagram of an integrated module from still another perspective according to an implementation of the present disclosure;
FIG. 7 is a schematic diagram of arrangement of flow channels in a body of an integrated module from another perspective according to an implementation of the present disclosure, where it should be noted that, the figure shows the flow channels and parts defining the flow channels on the body, where internal channels of the parts are the flow channels; and also shows jacks configured to insert corresponding valves;
FIG. 8 is a schematic exploded view of a body of an integrated module according to another implementation of the present disclosure; and
FIG. 9 to FIG. 20 are respectively schematic diagrams of operating principles of a vehicle thermal management system according to an implementation of the present disclosure in an air conditioning independent cooling mode, a battery independent cooling mode, an air conditioning cooling and battery cooling dual-open mode, an air source heat pump mode, a coolant source heat pump mode, a PTC heating mode, an engine heating mode, an engine waste heat heating battery mode, a PTC heating battery mode, a dehumidification mode, and a passenger compartment heating and battery cooling mode.

### DETAILED DESCRIPTION

The following describes the specific implementations of the present disclosure in detail with reference to the drawings. It should be understood that, the specific implementations described herein are merely used to describe and explain the present disclosure, but are not intended to limit the present disclosure.

Unless otherwise specified, nouns of locations such as "up and down" in the present disclosure are generally defined based on figure plane directions of drawings. Optionally, "Up and down" may be the same as directions indicated by up and down of the vehicle, and "inside and outside" are an inner part and an outer part of a corresponding component. In addition, the used terms such as "first" and "second" are used only to distinguish descriptions, and should not be understood as indicating or implying relative importance.

In addition, in the description of the present disclosure, it should be noted that, unless otherwise explicitly specified or limited, the terms such as "arrange", "connect", and "connection" should be understood in a broad sense. For example, the connection may be a fixed connection, a detachable connection, or an integral connection; or the connection may be a direct connection, an indirect connection through an intermediate medium, or internal communication between two elements. Persons of ordinary skill in the art may understand the specific meanings of the foregoing terms in the present disclosure according to specific situations.

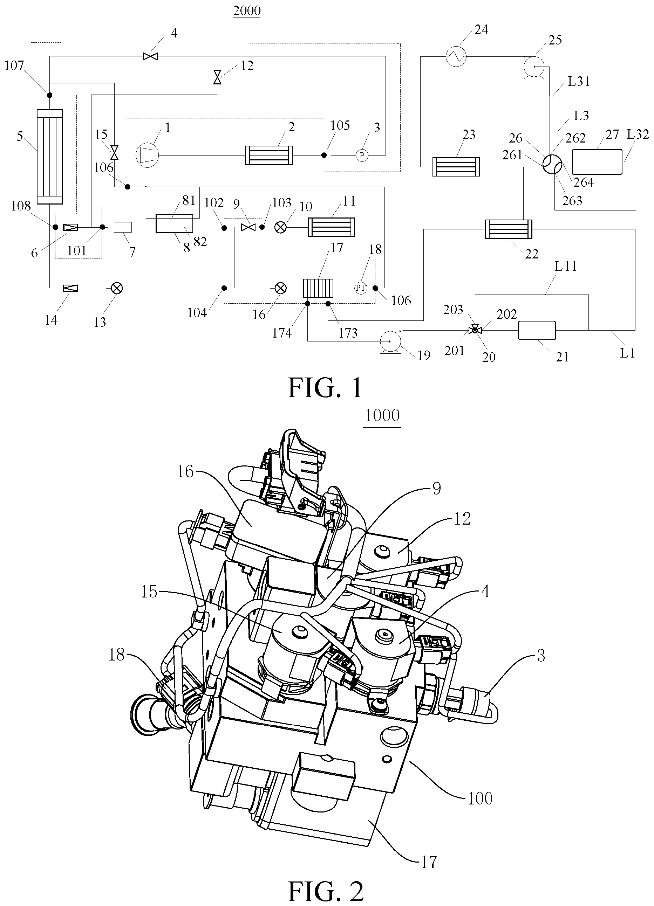

As shown in FIG. 1 to FIG. 20, the present disclosure provides an integrated module 1000 for a vehicle thermal management system, a vehicle thermal management system 2000 having the integrated module 1000, and a vehicle having the vehicle thermal management system 2000.

The vehicle thermal management system 2000 may include the integrated module 1000, a compressor 1, an indoor condenser 2, an outdoor heat exchanger 5, an indoor evaporator 11, a battery heat exchanger 17, an engine 27, and the like. The integrated module 1000 is provided with a number of corresponding interfaces respectively connected to the compressor 1, the indoor condenser 2, the outdoor heat exchanger 5, the indoor evaporator 11, the battery heat exchanger 17, and the like, to form various flow paths through connections with the foregoing thermal management devices, to implement various preset modes of the vehicle thermal management system, for example, an air conditioning cooling mode, a battery cooling mode, a battery heating mode, a heat pump heating mode, an air conditioning dehumidification mode, and an engine heating mode.

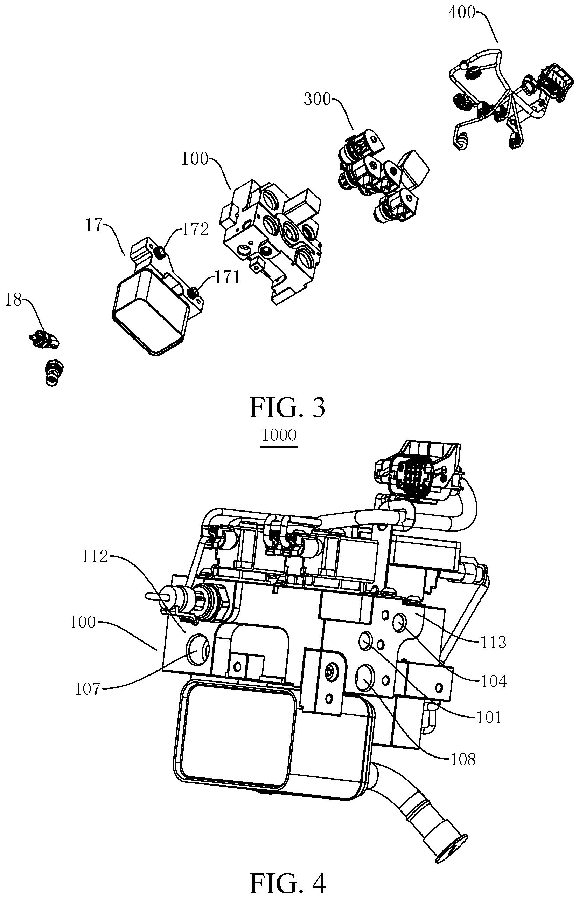

As shown in FIG. 3 to FIG. 8, the integrated module 1000 provided in the present disclosure includes a body 100, a number of interfaces, and a valve set 300. At least one flow channel 200 is provided in the body 100. The number of interfaces (including two or more) are provided on the body 100 to be in communication with corresponding flow channels 200, and are configured to connect to corresponding thermal management devices (such as the compressor 1, the outdoor heat exchanger 5, and the battery heat exchanger 17) in the thermal management system. The number of interfaces include an indoor condenser outlet interface 105, a first interface 101, a second interface 102, a battery heat exchanger first opening interface 109, a battery heat exchanger second opening interface 110, and a compressor inlet interface 106. The indoor condenser outlet interface 105 is connected to the first interface 101 through a flow channel 200. In this way, a refrigerant from the indoor condenser 2 can flow into the integrated module 1000 through the indoor condenser outlet interface 105, and can flow out of the integrated module 1000 through the first interface 101. The second interface 102 is connected to the battery heat exchanger first opening interface 109 through a flow channel 200, and the battery heat exchanger second opening interface 110 is connected to the compressor inlet interface 106 through a flow channel 200. In this way, a refrigerant flowing into the integrated module 1000 through the second interface 102 can flow into a first opening of the battery heat exchanger 17 through the battery heat exchanger first opening interface 109, can flow into the integrated module through the battery heat exchanger second opening interface 110 after flowing through the battery heat exchanger 17, and then can flow out of the integrated module 1000 through an outlet of the compressor 1, to flow into the compressor 1.

The battery heat exchanger 17 is configured to exchange heat with a battery coolant circuit L1 in which a battery 21 is located, and the battery coolant circuit L1 is configured to exchange heat with an engine coolant circuit L3 in which an engine 27 is located.

The valve set 300 is arranged on the body 100. The valve set 300 includes a first expansion valve 16. The first expansion valve 16 is arranged on the flow channel 200 between the second interface 102 and the battery heat exchanger first opening interface 109. In other words, a first port of the first expansion valve 16 is connected to the second interface 102, and a second port of the first expansion valve 16 is connected to the battery heat exchanger first opening interface 109. In this way, the first expansion valve 16 can throttle and depressurize a refrigerant from the second interface 102. The first expansion valve 16 has functions of throttling and performing communication/interception.

It may be understood that, the battery heat exchanger first opening interface 109 is an interface that is on the body 100 and configured to connect to a battery heat exchanger first opening 171 of the battery heat exchanger 17. The battery heat exchanger second opening interface 110 is an interface that is on the body 100 and configured to connect to a battery heat exchanger second opening 172 of the battery heat exchanger 17. The compressor inlet interface 106 is an interface that is on the body 100 and configured to connect to a refrigerant inlet of the compressor 1. The indoor condenser outlet interface 105 is an interface that is on the body 100 and configured to connect to a refrigerant outlet of the indoor condenser 2.

In the integrated module 1000 provided in the present disclosure, interfaces connected to thermal management devices are provided on a body 100, and flow channels 200 are provided in the body 100 to replace existing connection pipelines, so that a quantity of connection pipelines in a thermal management system can be reduced, and the thermal management system can be simplified. A valve set 300 is integrated on the body 100, so that a quantity of supports for mounting valves can be effectively reduced when maintenance and disassembly are facilitated. In addition, the design of the flow channels 200 in the body 100 can also reduce weight of the integrated module 1000, thereby facilitating lightweight design of an entire vehicle, and reducing costs and fuel consumption. In addition, use of components is reduced, so that an arrangement space of the entire vehicle can also be reduced. In addition, in the present disclosure, the flow channels 200 may be flexibly designed on the body 100 of the integrated module 1000, so that arrangement positions of the valves may also be flexibly selected, to adapt to different entire vehicle arrangement, thereby facilitating platform design of the entire vehicle. In other words, in the present disclosure, through the foregoing solutions, the thermal management devices can be systematically integrated, thereby facilitating integration of the thermal management system. In this way, the vehicle thermal management system can be simplified overall, costs can be reduced, and the vehicle thermal management system can also be easy to assemble.

**In** addition, a battery heat exchanger 17 is arranged, so that an air conditioning system in which a compressor 1 is located can exchange heat with a battery 21 (such as a power battery) or the like of the vehicle, to heat or cool the battery 21. In addition, the air conditioning system in which the compressor 1 is located and the battery 21 can exchange heat with a flow path in which an engine 27 is located, so that waste heat of the engine 27 can be utilized, thereby improving a utilization rate of energy of the vehicle thermal management system, and achieving energy saving.

**In** addition to implementing a thermal management mode of the battery 21, when the foregoing integrated module 1000 is applied to the vehicle thermal management system, the integrated module 1000 is connected to other heat exchange devices in the thermal management system, so that other preset thermal management modes can be implemented. For example, a refrigerant enters an indoor condenser 2 from an outlet of the compressor 1, and is condensed and releases heat in the indoor condenser 2, to implement a passenger compartment heating mode. Then, the refrigerant enters the integrated module 1000 from an indoor condenser outlet interface 105, and flows out of the integrated module 1000 from the first interface 101. After passing through a liquid storage drying tank 7 and a coaxial tube 8 (for details, refer to below), the refrigerant enters the integrated module 1000 from a second interface 102. Then, the refrigerant may flow into a first expansion valve 16, and is throttled and depressurized by the first expansion valve 16. In this way, the refrigerant can absorb heat in the battery heat exchanger 17, thereby recovering waste heat of the engine 27. The recovered heat may be used to heat the refrigerant in the air conditioning system.

In the present disclosure, a blower or a fan may be used in cooperation to directly blow heat released by the indoor condenser 2 to a riding room, to improve utilization efficiency of the heat. Certainly, the heat released by the indoor condenser 2 may also be transferred to the riding room by using a heater core 23. This is not limited in the present disclosure.

In an embodiment, the first expansion valve 16 may be an electronic expansion valve.

In an embodiment, to further simplify a structure of the vehicle thermal management system, as shown in FIG. 3, in the present disclosure, an integrated wiring harness 400 may be used to connect the thermal management devices. The integrated wiring harness 400 may be arranged on the integrated module 1000.

In an embodiment, as shown in FIG. 1 to FIG. 8, in an implementation of the present disclosure, the integrated module 1000 may further include the battery heat exchanger 17. The battery heat exchanger 17 is arranged on the body 100. The battery heat exchanger 17 further includes a battery heat exchanger third opening 173 and a battery heat exchanger fourth opening 174. The battery heat exchanger third opening 173 and the battery heat exchanger fourth opening 174 are configured to connect to the battery coolant circuit L1. The battery heat exchanger 17 is integrated on the body 100, so that integration of the integrated module 1000 can be further improved, and a space required by the vehicle thermal management system can be further reduced. In addition, the battery heat exchanger 17 is integrated on the body 100, so that a connection pipeline between the battery heat exchanger 17 and the air conditioning system can be shortened or eliminated, thereby reducing costs. For example, in this implementation, the battery heat exchanger first opening 171 of the battery heat exchanger 17 and the battery heat exchanger first opening interface 109 on the body 100 may be directly connected or connected through a short pipeline, and the battery heat exchanger second opening 172 and the battery heat exchanger second opening interface 110 on the body 100 may be directly connected or connected through a short pipeline.

In an embodiment, as shown in FIG. 1 to FIG. 8, in an implementation of the present disclosure, the number of interfaces may further include an outdoor heat exchanger first opening interface 107 and an outdoor heat exchanger second opening interface 108. The indoor condenser outlet interface 105 is connected to the first interface 101 through the flow channel 200. The indoor condenser outlet interface 105 is connected to the outdoor heat exchanger first opening interface 107 through a flow channel 200. The valve set 300 may further include a first switch valve 12 and a second switch valve 4. The first switch valve 12 is located on the flow channel 200 between the indoor condenser outlet interface 105 and the first interface 101, to implement communication and interception of the flow channel 200 between the indoor condenser outlet interface 105 and the first interface 101. The second switch valve 4 is located on the flow channel 200 between the indoor condenser outlet interface 105 and the outdoor heat exchanger first opening interface 107, to implement communication and interception of the flow channel 200 between the indoor condenser outlet interface 105 and the outdoor heat exchanger first opening interface 107.

Based on this, when the integrated module 1000 is applied to the vehicle thermal management system 2000, through cooperation of the first switch valve 12, the second switch valve 4, and the first expansion valve 16, different thermal management modes of the vehicle thermal management system may be implemented. For example, an independent air conditioning cooling mode and an independent heat pump mode may be implemented. When a passenger compartment in summer needs to be cooled to implement the air conditioning cooling mode, the first switch valve 12 may be closed, and the second switch valve 4 may be opened. In this way, after passing through the indoor condenser 2 (no heat is released in this case), a refrigerant flows out of the integrated module 1000 through the outdoor heat exchanger first opening interface 107 of the body 100, and enters the outdoor heat exchanger 5. The refrigerant flowing through the outdoor heat exchanger 5 may enter the body 100 through the outdoor heat exchanger second opening interface 108 of the body 100, and then may flow out of the body 100 through a third interface 103 (refer to below), so that the refrigerant flows into the indoor evaporator 11 for evaporation and heat absorption. In the heat pump mode, the first switch valve 12 may be opened, and the second switch valve 4 may be closed. In this way, after a refrigerant releases heat through the indoor condenser 2, the refrigerant may pass through the first switch valve 12, enter a first opening through a second opening of the outdoor heat exchanger 5 and flow through the outdoor heat exchanger 5, and then return to the compressor 1. In this way, heat of an external environment can be recovered, thereby achieving a heat pump effect.

In this implementation, optionally, when an environmental temperature of the external environment is too low and the outdoor heat exchanger 5 does not achieve a heat pump effect, the first switch valve 12 may be opened, so that another part of the refrigerant enters the battery heat exchanger 17 after passing through the first switch valve 12, to absorb heat of the battery 21 or the engine 27, to heat the passenger compartment. In this way, it is ensured that a heating effect of the passenger compartment meets a requirement.

In an embodiment, as shown in FIG. 1 to FIG. 7, in an implementation of the present disclosure, the number of interfaces may further include a third interface 103. The second interface 102 is connected to the third interface 103 through a flow channel 200. The third interface 103 is configured to connect to a first port of a second expansion valve 10. A second port of the second expansion valve 10 is connected to a refrigerant inlet of the indoor evaporator 11, to throttle and depressurize a refrigerant before the refrigerant enters the indoor evaporator 11. In this way, the refrigerant can be evaporated and absorb heat in the indoor evaporator 11. The valve set 300 further includes a third switch valve 9. The third switch valve 9 is arranged on the flow channel 200 between the second interface 102 and the third interface 103, to implement communication and interception of the flow channel 200 between the second interface 102 and the third interface 103.

Based on this, the air conditioning cooling mode can be implemented. In the air conditioning cooling mode, the first switch valve 12 and the third switch valve 9 may be opened, and the second switch valve 4 and the first expansion valve 16 may be closed. In this way, a refrigerant may pass from the compressor 1, the indoor condenser 2 (in this case, the indoor condenser 2 may not exchange heat, and is only used as a channel through which the refrigerant flows), the third switch valve 9, and the second expansion valve 10 successively. Under action of the second expansion valve 10, the refrigerant is throttled and depressurized, and flows into the indoor evaporator 11 to be evaporated in the indoor evaporator 11. In this way, the air conditioning cooling mode is implemented.

In addition, in the air conditioning cooling mode, if the first expansion valve 16 is also opened, the battery 21 may be further cooled when the air conditioning cooling mode is implemented.

In this implementation, the second expansion valve 10 may be used as a thermal expansion valve, which can achieve a low cost effect when the refrigerant can be throttled and depressurized. Certainly, it may be understood that, in other implementations of the present disclosure, an electronic expansion valve may be used to replace the third switch valve 9 and the second expansion valve 10 in this implementation.

The second expansion valve 10 may be integrated on the body 100, or may be connected to a corresponding interface on the body 100 through a pipeline. This is not limited in the present disclosure. Optionally, as shown in FIG. 1 to FIG. 7, the valve set 300 further includes the second expansion valve 10. The first port of the second expansion valve 10 is connected to the third interface 103. The second port of the second expansion valve 10 is configured to connect to the refrigerant inlet of an indoor evaporator 11. In other words, in this implementation, the second expansion valve 10 is integrated on the body 100. In this way, a corresponding connection pipeline can be eliminated, costs can be reduced, and an overall volume of the thermal management system can be reduced.

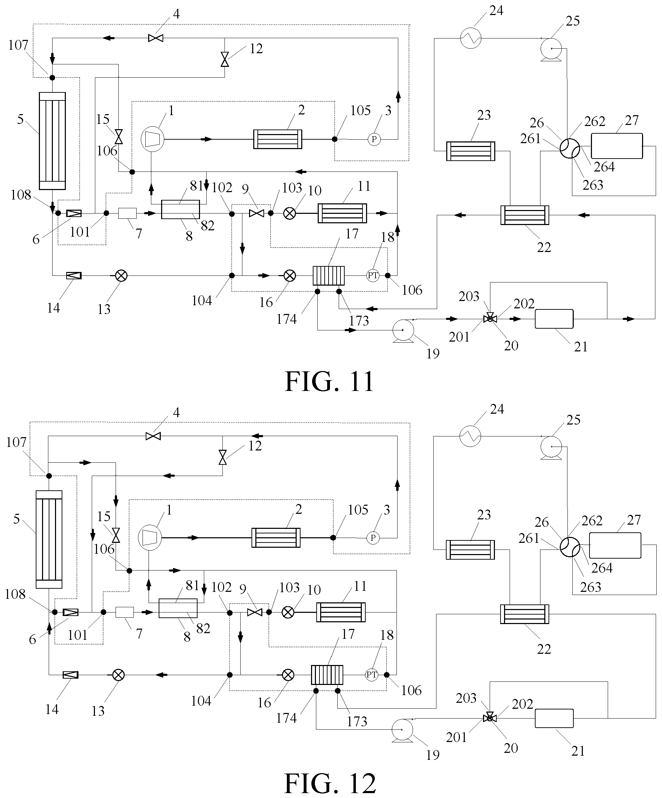

In an embodiment, as shown in FIG. 1 to FIG. 7, in an implementation of the present disclosure, the interfaces may further include a fourth interface 104. The fourth interface 104 is connected to a second interface 102 through a flow channel 200. The fourth interface 104 is configured to connect to a first port of a third expansion valve 13. A second port of the third expansion valve 13 is connected to the outdoor heat exchanger second opening interface 108. The valve set 300 may further include a fourth switch valve 15. The fourth switch valve 15 is arranged on a flow channel 200 between the second switch valve 4 and the compressor inlet interface 106. In this way, through cooperation of the first switch valve 12, the second switch valve 4, the third switch valve 9, the fourth switch valve 15, and the third expansion valve 13, a heat pump mode with an energy saving effect can be implemented. Specifically, in the mode, the first switch valve 12, the fourth switch valve 15, and the third expansion valve 13 may be opened, and the second switch valve 4 and the third switch valve 9 may be closed. In this way, referring to FIG. 12, a refrigerant flows through the indoor condenser 2, the first switch valve 12, the third expansion valve 13, the outdoor heat exchanger 5, and the fourth switch valve 15 successively, and then returns to the compressor 1. In the mode, the refrigerant passes through the outdoor heat exchanger 5, and absorbs heat from the external environment through a heat pump function of the outdoor heat exchanger 5, so that energy saving can be achieved.

In an embodiment, as shown in FIG. 1 to FIG. 7, in an implementation of the present disclosure, the integrated module 1000 may further include a pressure sensor 3. A fifth interface is further provided on the body 100. A detection end of the pressure sensor 3 extends into the fifth interface, to detect a pressure of a refrigerant entering the integrated module 1000 through the indoor condenser outlet interface 105. In addition/alternatively, the integrated module 1000 further includes a pressure-temperature sensor 18. A sixth interface is further provided on the body 100. A detection end of the second pressure-temperature sensor 18 extends into the sixth interface, to detect a pressure and a temperature of a refrigerant entering the integrated module 1000 through the battery heat exchanger second opening interface 110.

In this implementation, when the pressure sensor 3 detects that a pressure of a refrigerant flowing out of an outlet of the indoor condenser 2 is excessively high or excessively low, adjustment may be performed in time. When the pressure-temperature sensor 18 detects that a pressure and a temperature of a refrigerant flowing out of the battery heat exchanger second opening 172 is excessively high or excessively low, an opening degree of the first expansion valve 16 and/or the second expansion valve 10 may be correspondingly adjusted to adjust a flow rate. The pressure-temperature sensor 18 may be a PT sensor.

Specific arrangement positions of the interfaces and the valve set 300 on the body 100 are not limited in the present disclosure, and may be specifically determined according to specific arrangement positions of thermal management devices of the vehicle thermal management system on the vehicle, for example, the compressor 1, the indoor condenser 2, the outdoor heat exchanger 5, the indoor evaporator 11, and the battery heat exchanger 17.

In an embodiment, as shown in FIG. 4, FIG. 6, and FIG. 8, in an implementation of the present disclosure, the body 100 may have a top surface 1001, a bottom surface 1002, and a side surface 1003 connected between the top surface 1001 and the bottom surface 1002. The valve set 300 is arranged on the top surface 1001. The number of interfaces are provided on the side surface 1003 and the bottom surface 1002. In other words, in the number of interfaces, some interfaces may be located on the side surface 1003, and some interfaces may be located on the bottom surface 1002. The bottom surface 1002 is used for mounting the battery heat exchanger 17. In this way, the valve set 300 is uniformly arranged on an upper side of the body 100, the battery heat exchanger 17 is arranged on the other side of the body 100, and the number of interfaces other than interfaces connected to the battery 21 are provided on the side surface of the body 100. The manner of concentrated arrangement after classification facilitates overall design of the body 100.

A specific shape of the body 100 is not limited in the present disclosure. For example, as shown in FIG. 3, FIG. 4, and FIG. 6, the body 100 may be generally a cuboid structure. The side surface 1003 of the body 100 includes a first side surface 111, a second side surface 112, a third side surface 113, and a fourth side surface 114 that are connected to form an annular structure. The indoor condenser outlet interface 105 is provided on the first side surface 111. The outdoor heat exchanger first opening interface 107 is provided on the second side surface 112. The outdoor heat exchanger second opening interface 108, the first interface 101, and the fourth interface 104 are provided on the third side surface 113. The second interface 102, the third interface 103, and the compressor inlet interface 106 are provided on the fourth side surface 114. Different interfaces are provided on different side surfaces, so that arrangement of thermal management devices in the vehicle along a number of directions can be adapted, thereby improving versatility of the integrated module 1000.

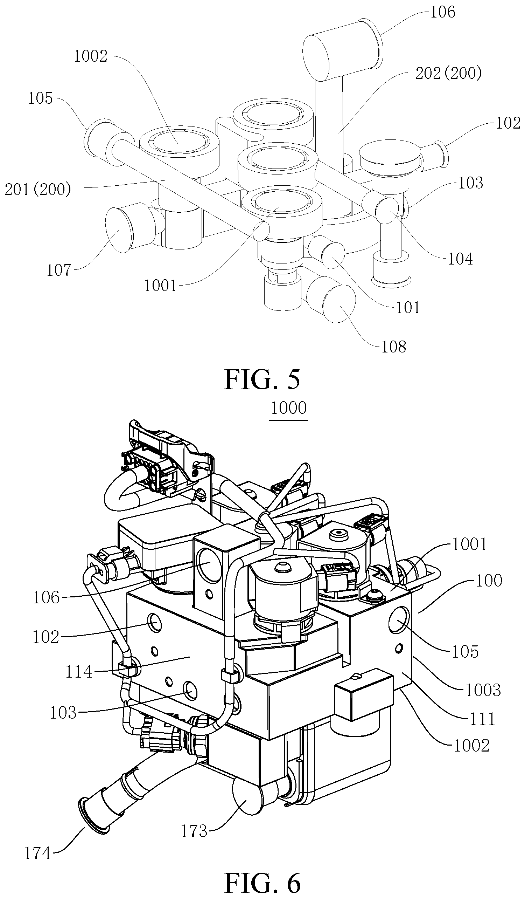

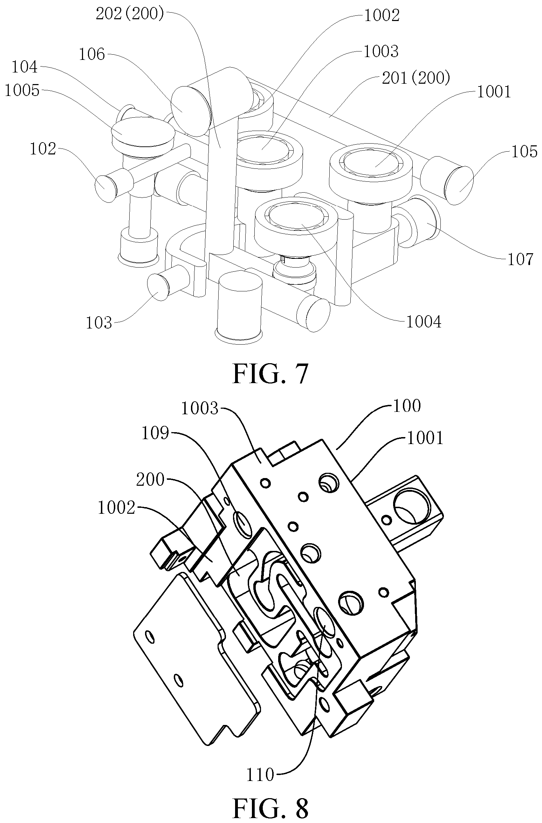

In an embodiment, as shown in FIG. 4 to FIG. 7, in an implementation of the present disclosure, the top surface 1001 of the body 100 is provided with a first jack 1001 and a second jack 1002 both extending toward the bottom surface 1002. The first jack 1001 is configured to insert the first switch valve 12. The second jack 1002 is configured to mount the second switch valve 4. The first jack 1001 and the second jack 1002 are arranged spaced away along a first direction. The indoor condenser outlet interface 105 is in communication with the first jack 1001 and the second jack 1002 respectively through a same first flow channel segment 201 extending along the first direction. In other words, referring to FIG. 5 and FIG. 7, a segment of flow channel is shared between the indoor condenser outlet interface 105 and the first jack 1001 and between the indoor condenser outlet interface 105 and the second jack 1002. The first direction is a direction of a connection line between the first side surface 111 and the third side surface 113. The first flow channel segment 201 forms a straight flow channel segment, so that a distance between the indoor condenser outlet interface 105 and the first jack 1001 and a distance between the indoor condenser outlet interface 105 and the second jack 1002 can be shortened. In this way, a refrigerant can be rapidly transferred to positions of the first switch valve 12 and the second switch valve 4, to distribute the refrigerant to corresponding thermal management devices. In addition, the segment of flow channel is shared between the indoor condenser outlet interface 105 and the first jack 1001 and between the indoor condenser outlet interface 105 and the second jack 1002, so that a quantity of arranged flow channels and difficulty of processing the flow channels can be reduced.

In an embodiment, as shown in FIG. 5 and FIG. 7, a flow channel 200 between the outdoor heat exchanger first opening interface 107 and the compressor inlet interface 106 includes at least a second flow channel segment 202 extending along a second direction. The compressor inlet interface 106 is located at an upper end of the second flow channel segment 202. The second direction is a direction of a connection line between the top surface 1001 and the bottom surface 1002, that is, an up-down direction of a figure plane of FIG. 7. The second flow channel segment 202 is arranged along the up-down direction, and the compressor inlet interface 106 is located at the upper end of the second flow channel segment 202. In this way, before entering the compressor 1 through the compressor inlet interface 106, liquid in a refrigerant can fall downward due to gravity, so that a liquid refrigerant that may exist can be removed at this stage. The second flow channel segment 202 achieves a gas-liquid separator effect.

In an embodiment, referring to FIG. 4 to FIG. 7, in an implementation of the present disclosure, compared with a center of a connection line between the second side surface 112 and the fourth side surface 114, the first flow channel segment 201 is closer to the second side surface 112, and the second flow channel segment 202 is closer to the fourth side surface 114. In other words, there is as large a spacing between the first flow channel segment 201 and the second flow channel segment 202 as possible along a direction of the connection line between the second side surface 112 and the fourth side surface 114.

A refrigerant flowing out of the indoor condenser 2 flows in the first flow channel segment 201 and has a high temperature. A refrigerant that is to return to the compressor 1 flows in the second flow channel segment 202, has a low temperature, and also requires the low temperature. Therefore, the first flow channel segment 201 and the second flow channel segment 202 are arranged spaced away by a large distance, so that impact between temperatures of the refrigerant in the first flow channel segment 201 and the refrigerant in the second flow channel segment 202 can be avoided. In this way, the refrigerant can enter the compressor 1 at the low temperature, and the compressor 1 can normally operate.

In an embodiment, referring to FIG. 5 and FIG. 7, the top surface of the body 100 is further provided with a third jack 1003, a fourth jack 1004, and a fifth jack 1005. The third jack 1003 may be configured to mount the third switch valve 9. The fourth jack 1004 may be configured to mount the fourth switch valve 15. The fifth jack 1005 may be configured to mount the first expansion valve 16.

To reduce flow resistance of the refrigerant flowing in different flow channels 200, optionally, as shown in FIG. 8, in an implementation of the present disclosure, connections between the number of flow channels 200 may be configured as smooth transitions. In other words, connection locations of different flow channels 200 are curved connections. This greatly reduces the flow resistance, so that system performance is ensured. Optionally, during processing, a process such as milling or soldering may be used to process the connection portions of the smooth transitions.

It may be understood that, in other implementations of the present disclosure, a process such as drilling may alternatively be used. The connections between the flow channels 200 processed by the process are perpendicular to each other. Although the flow resistance at the connections of the flow channels 200 may be greater, processing is convenient, so that processing costs can be reduced.

In an embodiment, as shown in FIG. 1, in the present disclosure, the vehicle thermal management system 2000 may further include the outdoor heat exchanger 5. A refrigerant outlet of a compressor 1 is connected to a refrigerant inlet of the indoor condenser 2. A refrigerant outlet of the indoor condenser 2 is connected to the indoor condenser outlet interface 105. A refrigerant inlet of the compressor 1 is connected to the compressor inlet interface 106.

A first opening of the outdoor heat exchanger 5 is connected to the refrigerant outlet of the indoor condenser 2 through a flow channel 200 of the integrated module 1000, or the first opening of the outdoor heat exchanger 5 is connected to the refrigerant inlet of the compressor 1 through a flow channel 200 of the integrated module 1000. A second opening of the outdoor heat exchanger 5 is connected to the first interface 101.

In an embodiment, as shown in FIG. 1, the vehicle thermal management system 2000 may further include a coaxial tube 8. The coaxial tube 8 may include an inner tube and an outer tube sleeved mutually. An inner space of the inner tube defines a first channel 81. A space between the inner tube and the outer tube defines a second channel 82. The first channel 81 and the second channel 82 are configured to cause a temperature of a refrigerant flowing through the first channel 81 to be higher than a temperature of a refrigerant flowing through the second channel 82. The outdoor heat exchanger 5 includes the first opening and the second opening. When one of the first opening and the second opening is used as a refrigerant inlet, the other is used as a refrigerant outlet. A refrigerant inlet of the first channel 81 is connected to the second opening of the outdoor heat exchanger 5 through a flow channel 200 of the integrated module 1000, or the refrigerant inlet of the first channel 81 is connected to the refrigerant outlet of the indoor condenser 2 through a flow channel 200 of the integrated module 1000. A refrigerant outlet of the first channel 81 is connected to the second interface 102. A refrigerant inlet of the second channel 82 is connected to the compressor inlet interface 106. A refrigerant outlet of the second channel 82 is connected to the refrigerant inlet of the compressor 1.

In this way, after a refrigerant passes through the indoor condenser 2 or the outdoor heat exchanger 5, the high-temperature refrigerant may flow into the first channel 81; and a part of a refrigerant in a liquid state flowing back into the refrigerant inlet of the compressor 1 through the second channel 82 may be vaporized by the high-temperature refrigerant in the first channel 81. In this way, the refrigerant entering the refrigerant inlet of the compressor 1 is in a gas state, and a gas-liquid separator effect is achieved. In addition, through action of the coaxial tube 8, a quantity of used pipelines is reduced, so that the structure of the vehicle thermal management system can be simplified. In addition, through use of the coaxial tube 8, heat exchange between a high-temperature refrigerant and a low-temperature refrigerant can occur at the coaxial tube 8, so that heat exchange efficiency can be improved, and a temperature of a refrigerant finally entering the refrigerant inlet of the compressor 1 can be improved. In this way, it is ensured that the temperature of the refrigerant flowing out of the refrigerant outlet of the compressor 1 meets a requirement.

In an embodiment, as shown in FIG. 1, the vehicle thermal management system 2000 may further include a liquid storage drying tank 7. The liquid storage drying tank 7 may be arranged on an upstream part of the coaxial tube 8. The liquid storage drying tank 7 is configured to absorb moisture in a refrigerant flow path and filter out impurities.

In an embodiment, as shown in FIG. 1, the vehicle thermal management system 2000 may further include a first one-way valve 6 and a second one-way valve 14. The first one-way valve 6 is arranged on a flow path between a second outlet of the outdoor heat exchanger 5 and the liquid storage drying tube 7, to allow a refrigerant to flow from a side of the outdoor heat exchanger 5 to a side of the liquid storage drying tube 7. The second one-way valve 14 is arranged between the third expansion valve 13 and the second outlet of the outdoor heat exchanger 5, to allow a refrigerant to flow from a side of the third expansion valve 13 side to the side of the outdoor heat exchanger 5.

A type of the outdoor heat exchanger 5 is not limited in the present disclosure. Optionally, the outdoor heat exchanger 5 may be an evaporative condenser, to improve a heat exchange effect. An operating principle of the evaporative condenser is known to a person skilled in the art, and is not described herein.

As shown in FIG. 1, and FIG. 9 to FIG. 20, the vehicle thermal management system 2000 may further include the engine 27, the battery coolant circuit L1, a first pump 19, the battery 21, and a first heat exchanger 22. A first end and a second end of the battery coolant circuit L1 are respectively connected to the battery heat exchanger third opening 173 and the battery heat exchanger fourth opening 174. The first pump 19, the battery 21, and the first heat exchanger 22 are connected in series (for example, in successive series) on the battery coolant circuit L1. The first heat exchanger 22 is configured to exchange heat with the engine coolant circuit L3, that is, exchange heat with the engine 27.

In this way, referring to FIG. 1, FIG. 11, and FIG. 12, when heat exchange needs to be performed on the battery 21 and the air conditioning system, for example, when the battery 21 needs to be cooled, the first pump 19 may be opened, so that a coolant in the battery coolant circuit L1 flows through the battery 21 and the battery heat exchanger 17. In this case, the first expansion valve 16 may be used to throttle and depressurize a refrigerant, to atomize the refrigerant. The atomized refrigerant enters the battery heat exchanger 17 and absorbs heat in the battery coolant circuit L1, thereby cooling the battery 21. When the battery 21 needs to be heated, the first pump 19 may be opened, so that the coolant in the battery coolant circuit L1 flows through the battery 21 and the first heat exchanger 22. In this case, the first heat exchanger 22 may perform heat exchange on heat of the engine 27, and the heat of the engine 27 is used to heat the battery 21.

As shown in FIG. 1, and FIG. 9 to FIG. 20, the vehicle thermal management system 2000 may further include a short circuit branch L11 and a three-way valve 20. A first port 201 and a second port 202 of the three-way valve 20 are connected between the first pump 19 and the battery 21. A third port 203 of the three-way valve 20 is connected to a flow path between the battery 21 and the first heat exchanger 22 through the short circuit branch L11. In other words, the short circuit branch L11 and the battery 21 are arranged in parallel.

In this way, referring to FIG. 1, FIG. 11, and FIG. 12, when heat exchange needs to be performed on the battery 21 and the air conditioning system, for example, when the battery 21 needs to be cooled, the first port 201 and the second port 202 of the three-way valve 20 may come into communication, to open the first pump 19, so that a coolant in the battery coolant circuit L1 flows through the battery 21 and the battery heat exchanger 17. In this case, the first expansion valve 16 may be used to throttle and depressurize a refrigerant, to atomize the refrigerant. The atomized refrigerant enters the battery heat exchanger 17 and absorbs heat in the battery coolant circuit L1, thereby cooling the battery 21. When the battery 21 needs to be heated, the first port 201 and the second port 202 of the three-way valve 20 may come into communication, to open the first pump 19, so that the coolant in the battery coolant circuit L1 flows through the battery 21 and the first heat exchanger 22. In this case, the first heat exchanger 22 may perform heat exchange on heat of the engine 27, and the heat of the engine 27 is used to heat the battery 21.

In this implementation, because the short circuit branch L11 is provided, when there is no need to heat or cool the battery 21, the coolant may flow through the short circuit branch L11 in the battery coolant circuit L1.

In the present disclosure, the engine 27 may be connected to the battery coolant circuit L1 by using any suitable coolant flow path, to exchange heat with the first heat exchanger 22. Optionally, as shown in FIG. 1, in an implementation of the present disclosure, the engine coolant circuit L3 may include a first circuit L31 and a second circuit L32. The vehicle thermal management system 2000 may further include a heater core 23, a PTC 24, a second pump 25, and a four-way valve 26. A first end and a second end of the first circuit L31 are respectively connected to two ports of the first heat exchanger 22, for example, connected to a first port and a second port of the first heat exchanger 22. The heater core 23, the PTC 24, the second pump 25, and the four-way valve 26 are connected in series (for example, in successive series) on the first circuit L31. The engine 27 is arranged on the second circuit L32. A first end and a second end of the second circuit L32 are respectively connected to other two ports of the four-way valve 26. To be specific, the four-way valve 26 is connected to the first circuit L31 through two ports (for example, a first port 261 and a second port 262 of the four-way valve 26), and is connected to the second circuit L32 through the other two ports (for example, a third port 263 and a fourth port 264 of the four-way valve 26).

Based on this, when waste heat of the engine 27 needs to be used to heat the passenger compartment, the first circuit L31 may come into communication with the second circuit L32 through the three-way valve 20, and the second pump 25 may be opened, to transfer the heat to the passenger compartment. When the waste heat of the engine 27 needs to be used to heat the battery, the heat of the engine 27 may be first transferred to the first circuit L31 through the coolant flow path of the engine 27, and then the first heat exchanger 22 exchanges heat with the battery coolant circuit L1, to heat a coolant in the battery coolant circuit L1, thereby heating the battery 21.

In addition, when a heating requirement of the passenger compartment is strong, the PTC 24 may be opened to heat the passenger compartment.

In addition, the waste heat of the engine 27 may alternatively be used for heat exchange with the first heat exchanger 22 through the first circuit L31, and then the first heat exchanger 22 exchanges heat with the air conditioning system through the battery coolant circuit L1 and the battery heat exchanger 17, to provide a heat source for the air conditioning system.

Operating processes of a number of typical operating modes of the vehicle thermal management system according to an implementation of the present disclosure are described in detail below with reference to the drawings.

The following typical operating modes of the vehicle thermal management system are specifically described: an air conditioning independent cooling mode, a battery independent cooling mode, an air conditioning cooling and battery cooling dual-open mode, an air source heat pump mode, a coolant source heat pump mode, a PTC heating mode, an engine heating mode, an engine waste heat heating battery mode, a PTC heating battery mode, a dehumidification mode, and a passenger compartment heating and battery cooling mode.

### 1. Air conditioning independent cooling mode

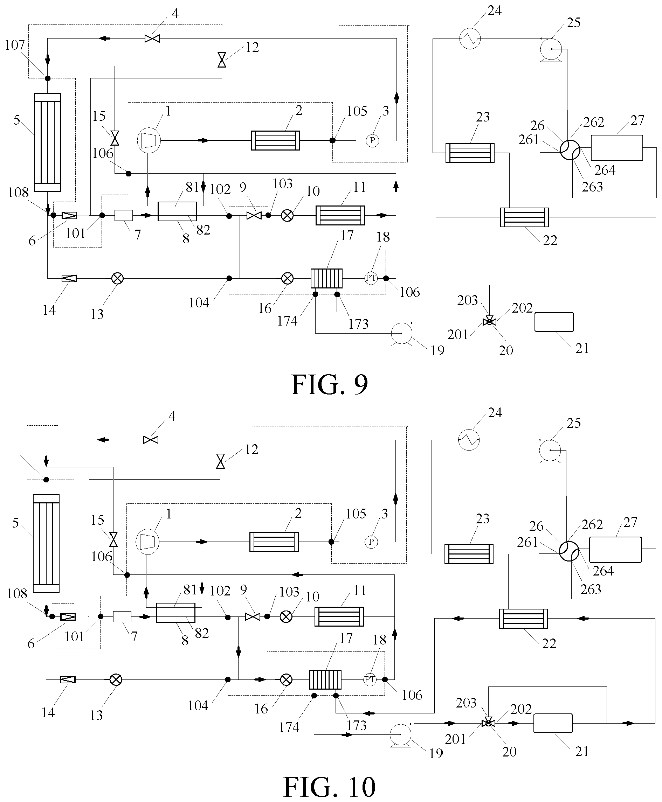

When the passenger compartment in summer needs to be cooled, the mode may be performed. Referring to FIG. 1 and FIG. 9, based on the integrated module 1000 provided in the present disclosure, a specific flowing process of a refrigerant in the mode is as follows: The refrigerant flows into the indoor condenser 2 from the refrigerant outlet of the compressor 1. The refrigerant flowing out of the refrigerant outlet of the indoor condenser 2 enters the integrated module 1000 from the indoor condenser outlet interface 105 on the body 100, and flows out of the integrated module 1000 from a seventh interface on the body 100 after passing through the pressure sensor 3 and the second switch valve 4. Then, the refrigerant enters the integrated module 1000 from an eighth interface after flowing through the outdoor heat exchanger 5, and flows out of the integrated module 1000 from the first interface 101 after passing through the first one-way valve 6. Then, the refrigerant enters the integrated module 1000 from the second interface 102 after passing through the liquid storage drying tank 7 and the first channel 81 of the coaxial tube 8, and flows out of the integrated module 1000 from the third interface 103 after passing through the third switch valve 9. Under action of the second expansion valve 10, the refrigerant is throttled and depressurized. In this way, a low-temperature and low-pressure refrigerant can be evaporated and absorb heat in the indoor evaporator 11, and the refrigerant flowing out of the refrigerant outlet of the indoor evaporator 11 returns to the compressor 1 after passing through the second channel 82 of the coaxial tube 8. In this way, air conditioning independent cooling can be implemented.

Pipelines may be used to connect the compressor 1 to the indoor condenser 2, the compressor 1 to the coaxial tube 8, and each interface of the integrated module 1000 to a corresponding heat exchanger.

It should be noted that, in the mode, although the refrigerant flowing out of the outlet of the compressor 1 flows through the indoor condenser 2, a fan or a blower may not be used to blow air to the indoor condenser 2, so that a high-temperature and high-pressure refrigerant flowing into the indoor condenser 2 does not release heat and is not condensed in the indoor condenser 2. In other words, in the mode, the indoor condenser 2 is used as a flow channel 200 for passing.

### 2. Battery independent cooling mode

When there is no cooling requirement for an air conditioner but the battery 21 needs to be cooled, the mode may be performed. Referring to FIG. 1 and FIG. 10, based on the integrated module 1000 provided in the present disclosure, specific flowing processes of a refrigerant and a coolant in the mode are as follows: The refrigerant flows into the indoor condenser 2 from the refrigerant outlet of the compressor 1. The refrigerant flowing out of the refrigerant outlet of the indoor condenser 2 enters the integrated module 1000 from the indoor condenser outlet interface 105, and flows out of the integrated module 1000 from a seventh interface on the body 100 after passing through the pressure sensor 3 and the second switch valve 4. Then, the refrigerant enters the integrated module 1000 from an eighth interface after flowing through the outdoor heat exchanger 5, and flows out of the integrated module 1000 from the first interface 101 after passing through the first one-way valve 6. Then, the refrigerant enters the integrated module 1000 from the second interface 102 after passing through the liquid storage drying tank 7 and the first channel 81 of the coaxial tube 8. Under action of the first expansion valve 16, the refrigerant is throttled and depressurized. In this way, a low-temperature and low-pressure refrigerant flows into the battery heat exchanger 17 through the battery heat exchanger first opening 171, and can absorb heat in the battery heat exchanger 17. The refrigerant flowing out of the battery heat exchanger second opening 172 flows out of the integrated module 1000 from the compressor inlet interface 106 on the body 100, and returns to the compressor 1 after passing through the second channel 82 of the coaxial tube 8. In the battery coolant circuit L1, after passing through the first pump 19, and the first port 201 and the second port 202 of the three-way valve 20 successively, the coolant enters the battery 21. Then, the coolant passes through the first heat exchanger 22 and enters the battery heat exchanger 17, and finally returns to the first pump 19. The refrigerant and the coolant exchange heat in the battery heat exchanger 17, to reduce a temperature of the coolant in the battery coolant circuit L1, so that the battery 21 can be cooled. In this way, independent cooling of the battery 21 can be implemented.

Similarly, in the mode, the indoor condenser 2 may not release heat, and the indoor condenser 2 is used as a flow channel 200 for passing.

### 3. Air conditioning cooling and battery cooling dual-open mode

When the passenger compartment needs to be cooled and the battery 21 also needs to be cooled due to an excessively high temperature, the mode may be performed. Referring to FIG. 1 and FIG. 11, a specific flowing process of a refrigerant in the mode is as follows: The refrigerant flows into the indoor condenser 2 from the refrigerant outlet of the compressor 1. The refrigerant flowing out of the refrigerant outlet of the indoor condenser 2 enters the integrated module 1000 from the indoor condenser outlet interface 105, and flows out of the integrated module 1000 from a seventh interface on the body 100 after passing through the pressure sensor 3 and the second switch valve 4. Then, the refrigerant enters the integrated module 1000 from an eighth interface after flowing through the outdoor heat exchanger 5, and flows out of the integrated module 1000 from the first interface 101 after passing through the first one-way valve 6. Then, the refrigerant enters the integrated module 1000 from the second interface 102 after passing through the liquid storage drying tank 7 and the first channel 81 of the coaxial tube 8. Then, the refrigerant has two paths. In a first path, the refrigerant flows out of the integrated module 1000 from the third interface 103 after passing through the third switch valve 9. Under action of the second expansion valve 10, the refrigerant is throttled and depressurized. In this way, a low-temperature and low-pressure refrigerant can be evaporated and absorb heat in the indoor evaporator 11, and the refrigerant flowing out of the refrigerant outlet of the indoor evaporator 11 returns to the compressor 1 after passing through the second channel 82 of the coaxial tube 8. In this way, air conditioning cooling can be implemented. In a second path, under action of the first expansion valve 16, the refrigerant is throttled and depressurized. In this way, a low-temperature and low-pressure refrigerant flows into the battery heat exchanger 17 through the battery heat exchanger first opening 171, and can absorb heat in the battery heat exchanger 17, to absorb a temperature of the coolant in the battery coolant circuit L1. In this way, the battery 21 is cooled. The refrigerant flowing out of the battery heat exchanger second opening 172 flows out of the integrated module 1000 from the compressor inlet interface 106 on the body 100, and returns to the compressor 1 after passing through the second channel 82 of the coaxial tube 8. In this way, the air conditioning cooling and battery cooling dual-open mode can be implemented.

In the mode, the flowing process of the coolant in the battery coolant circuit L1 is the same as the flowing process of the coolant in the independent cooling of the battery 21. Details are not described herein again.

### 4. Air source heat pump mode

When an air conditioner in winter needs to generate heat, a driving mode is an EV mode, and the environmental temperature is higher than -10°C, the mode may be performed, that is, an energy-saving heat pump air conditioning system may be used to generate heat. Referring to FIG. 1 and FIG. 12, in the mode, a specific flowing process of a refrigerant is as follows: The refrigerant flows into the indoor condenser 2 from the refrigerant outlet of the compressor 1. The refrigerant releases heat in the indoor condenser 2, to heat the passenger compartment. The refrigerant flowing out of the refrigerant outlet of the indoor condenser 2 enters the integrated module 1000 from the indoor condenser outlet interface 105, and flows out of the integrated module 1000 from the first interface 101 on the body 100 after passing through the pressure sensor 3 and the first switch valve 12. Then, the refrigerant enters the integrated module 1000 from the second interface 102 after passing through the liquid storage drying tank 7 and the first channel 81 of the coaxial tube 8, and then passes through the third expansion valve 13 and the second one-way valve 14. Under action of the third expansion valve 13, the refrigerant is throttled and depressurized. In this way, a low-temperature and low-pressure refrigerant flows into the outdoor heat exchanger 5 through the second opening of the outdoor heat exchanger 5, and can absorb heat in the outdoor heat exchanger 5, to absorb a temperature of the external environment. The refrigerant flowing out of the first opening of the outdoor heat exchanger 5 passes through the fourth switch valve 15, flows out of the integrated module 1000 from the compressor inlet interface 106 on the body 100, and returns to the compressor 1 after passing through the second channel 82 of the coaxial tube 8.

### 5. Coolant source heat pump mode

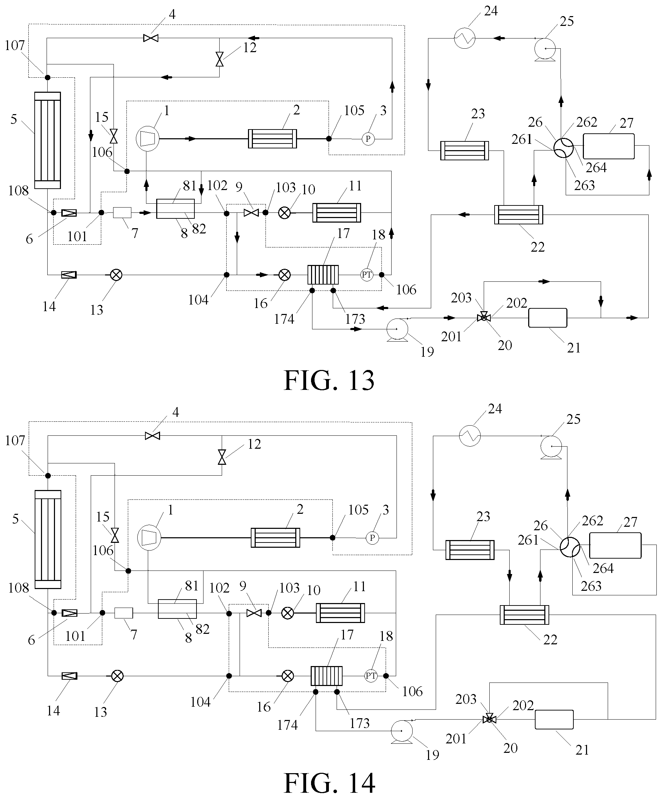

When a driving mode is switched from an HEV mode to an electric EV mode, a water temperature of the engine 27 is still relatively high. In this case, waste heat of the engine 27 can be fully utilized to provide a heat source for a heat pump, to heat the passenger compartment. Referring to FIG. 1 and FIG. 13, in the mode, specific flowing processes of a refrigerant and a coolant are as follows: The refrigerant flows into the indoor condenser 2 from the refrigerant outlet of the compressor 1. The refrigerant releases heat in the indoor condenser 2, to heat the passenger compartment. The refrigerant flowing out of the refrigerant outlet of the indoor condenser 2 enters the integrated module 1000 from the indoor condenser outlet interface 105, and flows out of the integrated module 1000 from the first interface 101 on the body 100 after passing through the pressure sensor 3 and the first switch valve 12. Then, the refrigerant enters the integrated module 1000 from the second interface 102 after passing through the liquid storage drying tank 7 and the first channel 81 of the coaxial tube 8, and then passes through the first expansion valve 16. Under action of the first expansion valve 16, the refrigerant is throttled and depressurized. In this way, a low-temperature and low-pressure refrigerant flows into the battery heat exchanger 17 through the battery heat exchanger first opening 171, and can absorb heat in the battery heat exchanger 17. The refrigerant flowing out of the battery heat exchanger second opening 172 flows out of the integrated module 1000 from the compressor inlet interface 106 on the body 100, and returns to the compressor 1 after passing through the second channel 82 of the coaxial tube 8.

In the battery coolant circuit L1, after passing through the first pump 19, the first port 201 and the third port 203 of the three-way valve 20, the short circuit branch L11, and the first heat exchanger 22 successively, the coolant enters the battery heat exchanger 17 to exchange heat with the refrigerant, and finally returns to the first pump 19.

In the first circuit L31 and the second circuit L32, after passing through the second pump 25, the PTC 24, and the heater core 23 successively, the coolant enters the first heat exchanger 22 for heat exchange. Then, the coolant enters the second circuit L32 through the first port 261 and the third port 263 of the four-way valve 26. Then, the coolant enters the engine 27, and returns to the second pump 25 through the fourth port 264 and the second port 262 of the four-way valve 26. In this way, the heat of the engine 27 can be used as the heat source, to implement the coolant heat pump mode.

It may be understood that, in the mode, the PTC 24 may not perform heating. In addition, during operation of an air source heat pump, if waste heat of the engine 27 is available, the air source heat pump and a water source heat pump operate may also operate in parallel at the same time, thereby more fully utilizing the waste heat and reducing energy consumption. In this case, for a specific flow path of the refrigerant, refer to the following two modes. Details are not described herein.

### 6. PTC heating mode

When the heating requirement of the passenger compartment is very strong, for example, when a set temperature in the vehicle room is very high, the PTC 24 may also be opened for heating, to perform the PTC heating mode. Referring to FIG. 1 and FIG. 14, in the mode, a specific flowing process of a coolant in the first circuit L31 is as follows: After passing through the second pump 25, the PTC 24, the heater core 23, the first heat exchanger 22, and the first port 261 and the second port 262 of the four-way valve 26 successively, the coolant returns to the second pump 25. In this way, the strong heating requirement of the passenger compartment is met by the PTC 24.

### 7. Engine heating mode

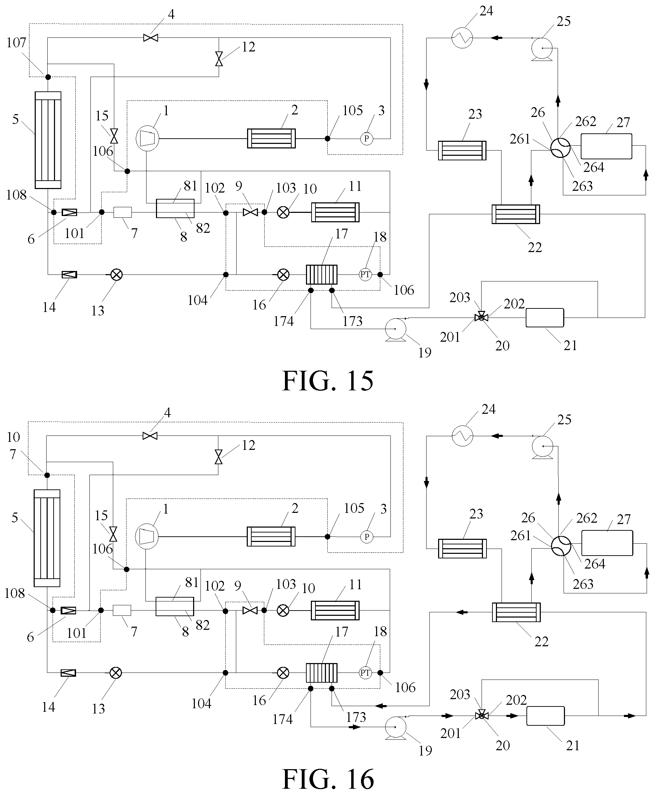

When a driving mode of the vehicle is an HEV mode, a water temperature of the engine 27 may be used for heating. Referring to FIG. 1 and FIG. 15, in the mode, a specific flowing process of a coolant in the first circuit L31 and the second circuit L32 is as follows: After passing through the second pump 25, the PTC 24, the heater core 23, the first heat exchanger 22, and the first port 261 and the third port 263 of the four-way valve 26 successively, the coolant enters the engine 27, and returns to the second pump 25 through the fourth port 264 and the second port 262 of the four-way valve 26. It may be understood that, in the mode, the PTC 24 may not perform heating.

### 8. Engine waste heat heating battery mode

When the battery 21 needs to be heated, for example, is charged at a low temperature, waste heat of the engine 27 may be used to heat the battery, to reduce energy consumption. Referring to FIG. 1 and FIG. 16, in the mode, a specific flowing process of a coolant is as follows: In the battery coolant circuit L1, the coolant passes through the first pump 19, the first port 201 and the second port 202 of the three-way valve 20, the battery 21, the first heat exchanger 22, and the battery heat exchanger 17 successively, and finally returns to the first pump 19.

In the first circuit L31 and the second circuit L32, after passing through the second pump 25, the PTC 24, and the heater core 23 successively, the coolant enters the first heat exchanger 22 for heat exchange, so that the coolant in a coolant flow path in which the battery 21 is located is heated. In this way, the battery 21 is heated. Then, the coolant enters the second circuit L32 through the first port 261 and the third port 263 of the four-way valve 26. Then, the coolant enters the engine 27, and returns to the second pump 25 through the fourth port 264 and the second port 262 of the four-way valve 26.

It may be understood that, in the mode, the PTC 24 may not perform heating.

### 9. PTC heating battery mode

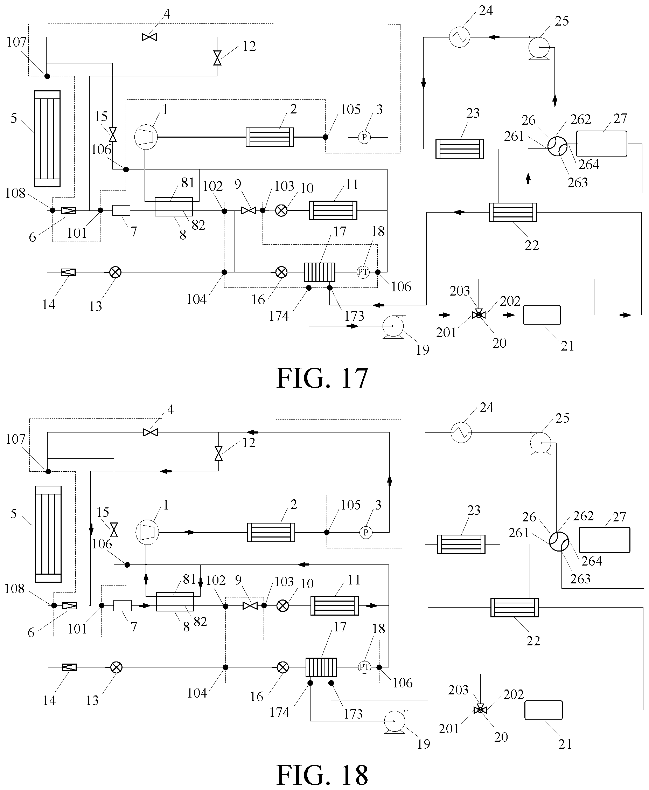

When a water temperature of the engine 27 is not high, the battery 21 may alternatively be heated by using the PTC 24. Referring to FIG. 1 and FIG. 17, in the mode, a specific flowing process of a coolant is as follows: In the battery coolant circuit L1, the coolant passes through the first pump 19, the first port 201 and the second port 202 of the three-way valve 20, the battery 21, the first heat exchanger 22, and the battery heat exchanger 17 successively, and finally returns to the first pump 19. In the first circuit L31, after passing through the second pump 25, the PTC 24, the heater core 23, the first heat exchanger 22, and the first port 261 and the second port 262 of the four-way valve 26, the coolant returns to the second pump 25. Through the first heat exchanger 22, heat of the PTC 24 may be transferred to the battery coolant circuit L1, to heat the battery 21.

### 10. Dehumidification mode

The dehumidification mode may be divided into a self-circulating dehumidification mode and a parallel dehumidification mode.

In spring and fall, the environmental temperature is around 15°C, and there may be requirements for dehumidification and heating of the passenger compartment. In this case, the self-circulating dehumidification mode may be performed. Referring to FIG. 1 and FIG. 18, in the mode, a flowing process of a refrigerant is as follows: The refrigerant flows into the indoor condenser 2 from the refrigerant outlet of the compressor 1. The refrigerant releases heat in the indoor condenser 2. The refrigerant flowing out of the refrigerant outlet of the indoor condenser 2 enters the integrated module 1000 from the indoor condenser outlet interface 105, and flows out of the integrated module 1000 from the first interface 101 on the body 100 after passing through the pressure sensor 3 and the first switch valve 12. Then, the refrigerant enters the integrated module 1000 from the second interface 102 after passing through the liquid storage drying tank 7 and the first channel 81 of the coaxial tube 8, and then passes through the third switch valve 9 and the second expansion valve 10. Under action of the second expansion valve 10, the refrigerant is throttled and depressurized. In this way, a low-temperature and low-pressure refrigerant flows into the indoor evaporator 11, and can be evaporated and absorb heat in the indoor evaporator 11. The refrigerant flowing out of the indoor evaporator 11 returns to the compressor 1 after passing through the second channel 82 of the coaxial tube 8.

In the mode, the refrigerant flowing out of the outlet of the compressor 1 releases heat in the indoor condenser 2, and the refrigerant entering the indoor evaporator 11 is evaporated and absorbs heat of the indoor environment. In this way, humid indoor air reaches a dew point temperature, is condensed into water, and is exhausted, to achieve a dehumidification effect. A dehumidified environment is added with the heat released from the indoor condenser 2. In this way, the environmental temperature reaches a comfortable temperature, and a fan can blow air into the passenger compartment, to achieve a comfortable environmental temperature of the passenger compartment.

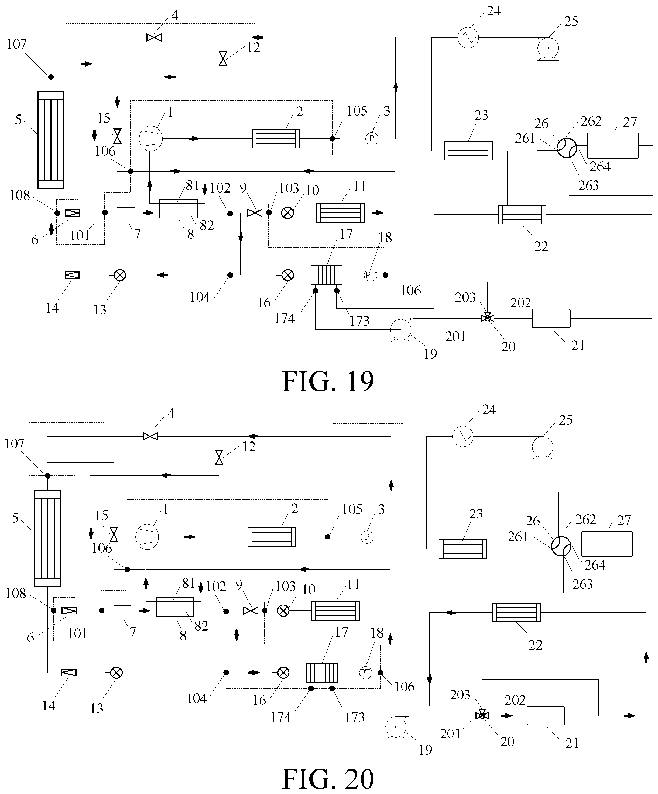

When the temperature in the vehicle is insufficient, the parallel dehumidification mode may be performed. Referring to FIG. 1 and FIG. 19, in the mode, a flowing process of a refrigerant is as follows: The refrigerant flows into the indoor condenser 2 from the refrigerant outlet of the compressor 1. The refrigerant releases heat in the indoor condenser 2. The refrigerant flowing out of the refrigerant outlet of the indoor condenser 2 enters the integrated module 1000 from the indoor condenser outlet interface 105, and flows out of the integrated module 1000 from the first interface 101 on the body 100 after passing through the pressure sensor 3 and the first switch valve 12. Then, the refrigerant enters the integrated module 1000 from the second interface 102 after passing through the liquid storage drying tank 7 and the first channel 81 of the coaxial tube 8. Then, the refrigerant has two paths. In a first path, the refrigerant flows out of the integrated module 1000 through the third interface 103 on the body 100, and then passes through the third switch valve 9 and the second expansion valve 10. Under action of the second expansion valve 10, the refrigerant is throttled and depressurized. In this way, a low-temperature and low-pressure refrigerant flows into the indoor evaporator 11, and can be evaporated and absorb heat in the indoor evaporator 11. The refrigerant flowing out of the indoor evaporator 11 returns to the compressor 1 after passing through the second channel 82 of the coaxial tube 8. In a second path, the refrigerant passes through the third expansion valve 13 and the second one-way valve 14. Under action of the third expansion valve 13, the refrigerant is throttled and depressurized. In this way, a low-temperature and low-pressure refrigerant flows into the outdoor heat exchanger 5 through the second opening of the outdoor heat exchanger 5, and can absorb heat in the outdoor heat exchanger 5, to absorb a temperature of the external environment. The refrigerant flowing out of the first opening of the outdoor heat exchanger 5 passes through the fourth switch valve 15, flows out of the integrated module 1000 from the compressor inlet interface 106 on the body 100, and returns to the compressor 1 after passing through the second channel 82 of the coaxial tube 8.

### 11. Passenger compartment heating and battery cooling mode

In a scenario in which an environment temperature in spring and fall is 20°C or below and a vehicle is driving intensely, there may be requirements that the battery 21 needs to be cooled and the passenger compartment needs to be heated. In this case, heating of the passenger compartment and cooling of the battery may be cycled for use. Referring to FIG. 1 and FIG. 20, in the mode, flow paths of a refrigerant and a coolant are as follows: The refrigerant flows into the indoor condenser 2 from the refrigerant outlet of the compressor 1. The refrigerant releases heat in the indoor condenser 2. The refrigerant flowing out of the refrigerant outlet of the indoor condenser 2 enters the integrated module 1000 from the indoor condenser outlet interface 105, and flows out of the integrated module 1000 from the first interface 101 on the body 100 after passing through the pressure sensor 3 and the first switch valve 12. Then, the refrigerant enters the integrated module 1000 from the second interface 102 after passing through the liquid storage drying tank 7 and the first channel 81 of the coaxial tube 8, and then passes through the first expansion valve 16. Under action of the first expansion valve 16, the refrigerant is throttled and depressurized. In this way, a low-temperature and low-pressure refrigerant flows into the battery heat exchanger 17, and absorbs, in the heat exchanger of the battery 21, a temperature of the coolant in a coolant flow path in which the battery 21 is located. In this way, the battery 21 is cooled. The refrigerant flowing out of the indoor evaporator 11 returns to the compressor 1 after passing through the second channel 82 of the coaxial tube 8. The refrigerant flowing out of the battery heat exchanger 17 flows out of the integrated module 1000 from the compressor inlet interface 106 on the body 100, and returns to the compressor 1 after passing through the second channel 82 of the coaxial tube 8. In the coolant flow path in which the battery 21 is located, after passing through the first pump 19, and the first port 201 and the second port 202 of the three-way valve 20 successively, the coolant enters the battery 21. Then, the coolant passes through the first heat exchanger 22 and enters the battery heat exchanger 17, and finally returns to the first pump 19.

When the temperature in the vehicle, the self-circulating dehumidification and the parallel dehumidification mode may also be opened as required, and the modes are switched as required, so that energy consumption of the entire vehicle is minimized as much as possible.

In the present disclosure, in addition to the foregoing typical modes, based on the specific structure of the vehicle thermal management system provided in the present disclosure, the vehicle thermal management system may alternatively have any appropriate thermal management mode. This is not limited in the present disclosure.

The exemplary implementations of the present disclosure are described in detail above with reference to the drawings, but the present disclosure is not limited to the specific details in the above implementations. Various simple variations may be made to the technical solutions of the present disclosure within the scope of the technical idea of the present disclosure, and such simple variations shall all fall within the protection scope of the present disclosure.

In addition, it should be noted that, the specific technical features described in the above specific implementations may be combined in any suitable manner without contradiction. To avoid unnecessary repetition, various possible combinations are not further described in the present disclosure.

In addition, the various implementations of the present disclosure may be combined without departing from the idea of the present disclosure, and such combinations shall also fall within the scope of the present disclosure.

## Claims

1. An integrated module (1000) for a vehicle thermal management system, comprising:
a body (100), at least one flow channel (200) being arranged in the body (100);
a plurality of interfaces, arranged on the body (100) to be in communication with corresponding flow channels (200), and configured to connect to corresponding thermal management devices in a thermal management system, the plurality of interfaces comprising:
an indoor condenser outlet interface (105), a first interface (101), a second interface (102), a battery heat exchanger first opening interface (109), a battery heat exchanger second opening interface (110), and a compressor inlet interface (106); and
the indoor condenser outlet interface (105) being connected to the first interface (101) through a flow channel (200), the second interface (102) being connected to the battery heat exchanger first opening interface (109) through a flow channel (200), and the battery heat exchanger second opening interface (110) being connected to the compressor inlet interface (106) through a flow channel (200),
wherein a battery heat exchanger (17) is configured to exchange heat with a battery coolant circuit (L1) in which a battery (21) is located, and the battery coolant circuit (L1) is configured to exchange heat with an engine coolant circuit (L3) in which an engine (27) is located; and
a valve set (300), arranged on the body (100), the valve set (300) comprising a first expansion valve (16), and the first expansion valve (16) being arranged on the flow channel (200) between the second interface (102) and the battery heat exchanger first opening interface (109), to cause the first expansion valve (16) to throttle and depressurize a refrigerant from the second interface (102).

2. The integrated module (1000) according to claim 1, further comprising the battery heat exchanger (17), the battery heat exchanger (17) being arranged on the body (100); and
the battery heat exchanger (17) further comprising a battery heat exchanger third opening (173) and a battery heat exchanger fourth opening (174), and the battery heat exchanger third opening (173) and the battery heat exchanger fourth opening (174) being respectively configured to connect to the battery coolant circuit (L1).

3. The integrated module (1000) according to claim 2, wherein the plurality of interfaces further comprise:
an outdoor heat exchanger first opening interface (107) and an outdoor heat exchanger second opening interface (108),
the indoor condenser outlet interface (105) is connected to the first interface (101) through the flow channel (200); and
the indoor condenser outlet interface (105) is connected to the outdoor heat exchanger first opening interface (107) through a flow channel (200); and
the valve set (300) further comprises a first switch valve (12) and a second switch valve (4),
the first switch valve (12) is located on the flow channel (200) between the indoor condenser outlet interface (105) and the first interface (101); and
the second switch valve (4) is located on the flow channel (200) between the indoor condenser outlet interface (105) and the outdoor heat exchanger first opening interface (107).

4. The integrated module (1000) according to claim 3, wherein the interfaces further comprise a third interface (103), and the third interface (103) is connected to the second interface (102) through a flow channel (200);
the third interface (103) is configured to connect to a first port of a second expansion valve (10), wherein a second port of the second expansion valve (10) is connected to a refrigerant inlet of an indoor evaporator (11); and
the valve set (300) further comprises a third switch valve (9), and the third switch valve (9) is arranged on the flow channel (200) between the second interface (102) and the third interface (103).

5. The integrated module (1000) according to claim 4, wherein the valve set (300) further comprises the second expansion valve (10), the first port of the second expansion valve (10) is connected to the third interface (103), and the second port of the second expansion valve (10) is configured to connect to the refrigerant inlet of the indoor evaporator (11).

6. The integrated module (1000) according to claim 5, wherein the plurality of interfaces further comprise a fourth interface (104), and the fourth interface (104) is connected to the second interface (102) through a flow channel (200);
the fourth interface (104) is configured to connect to a first port of a third expansion valve (13), wherein a second port of the third expansion valve (13) is connected to the outdoor heat exchanger second opening interface (108); and
the valve set (300) further comprises a fourth switch valve (15), and the fourth switch valve (15) is arranged on a flow channel (200) between the second switch valve (4) and the compressor inlet interface (106).

7. The integrated module (1000) according to any one of claims 1 to 6, wherein the body (100) comprises a top surface (1001), a bottom surface (1002), and a side surface (1003) connected between the top surface (1001) and the bottom surface (1002), the valve set (300) is arranged on the top surface (1001), the plurality of interfaces are arranged on the side surface (1003) and the bottom surface (1002), and the bottom surface (1002) is configured to mounting the battery heat exchanger (17).

8. The integrated module (1000) according to claim 6, wherein the body (100) comprises a top surface (1001), a bottom surface (1002), and a side surface (1003) connected between the top surface (1001) and the bottom surface (1002), the valve set (300) is arranged on the top surface (1001), the plurality of interfaces are arranged on the side surface (1003) and the bottom surface (1002), and the bottom surface (1002) is configured to mounting the battery heat exchanger (17); and
the side surface (1003) comprises a first side surface (111), a second side surface (112), a third side surface (113), and a fourth side surface (114) that are connected to form an annular structure, the indoor condenser outlet interface (105) is arranged on the first side surface (111), the outdoor heat exchanger first opening interface (107) is arranged on the second side surface (112), the outdoor heat exchanger second opening interface (108), the first interface (101), and the fourth interface (104) are arranged on the third side surface (113), and the second interface (102), the third interface (103), and the compressor inlet interface (106) are arranged on the fourth side surface (114).

9. The integrated module (1000) according to claim 8, wherein the top surface (1001) is provided with a first jack (1001) and a second jack (1002) both extending toward the bottom surface (1002), the first jack (1001) is configured to insert the first switch valve (12), and the second jack (1002) is configured to mount the second switch valve (4); and
the first jack (1001) and the second jack (1002) are arranged spaced away along a first direction, and the indoor condenser outlet interface (105) is in communication with the first jack (1001) and the second jack (1002) respectively through a same first flow channel segment (201) extending along the first direction,
wherein the first direction is a direction of a connection line between the first side surface (111) and the third side surface (113).

10. The integrated module (1000) according to claim 9, wherein a flow channel (200) between the outdoor heat exchanger first opening interface (107) and the compressor inlet interface (106) comprises at least a second flow channel segment (202) extending along a second direction, and the compressor inlet interface (106) is located at an upper end of the second flow channel segment (202),
wherein the second direction is a direction of a connection line between the top surface (1001) and the bottom surface (1002).

11. The integrated module (1000) according to claim 10, wherein compared with a center of a connection line between the second side surface (112) and the fourth side surface (114), the first flow channel segment (201) is closer to the second side surface (112), and the second flow channel segment (202) is closer to the fourth side surface (114).

12. The integrated module (1000) according to any one of claims 1 to 11, wherein connections among the plurality of flow channels (200) are configured as smooth transitions.

13. A vehicle thermal management system (2000), comprising a compressor (1), an indoor condenser (2), and the integrated module (1000) according to any one of claims 1 to 12,
a refrigerant outlet of the compressor (1) being connected to a refrigerant inlet of the indoor condenser (2);
a refrigerant outlet of the indoor condenser (2) being connected to the indoor condenser outlet interface (105); and
a refrigerant inlet of the compressor (1) being connected to the compressor inlet interface (106).

14. The vehicle thermal management system (2000) according to claim 13, further comprising an outdoor heat exchanger (5),
a first opening of the outdoor heat exchanger (5) being connected to the refrigerant outlet of the indoor condenser (2) through a flow channel (200) of the integrated module (1000), or the first opening of the outdoor heat exchanger (5) being connected to the refrigerant inlet of the compressor (1) through a flow channel (200) of the integrated module (1000); and
a second opening of the outdoor heat exchanger (5) being connected to the first interface (101).

15. The vehicle thermal management system (2000) according to claim 14, further comprising a coaxial tube (8),
the coaxial tube (8) comprising an inner tube and an outer tube sleeved mutually, an inner space of the inner tube defining a first channel (81), a space between the inner tube and the outer tube defining a second channel (82), and the first channel (81) and the second channel (82) being configured to cause a temperature of a refrigerant flowing through the first channel (81) to be higher than a temperature of a refrigerant flowing through the second channel (82);
a refrigerant inlet of the first channel (81) being connected to the second opening of the outdoor heat exchanger (5) through a flow channel (200) of the integrated module (1000), or the refrigerant inlet of the first channel (81) being connected to the refrigerant outlet of the indoor condenser (2) through a flow channel (200) of the integrated module (1000);
a refrigerant outlet of the first channel (81) being connected to the second interface (102); and a refrigerant inlet of the second channel (82) being connected to the compressor inlet interface (106), and a refrigerant outlet of the second channel (82) being connected to the refrigerant inlet of the compressor (1).

16. The vehicle thermal management system (2000) according to any one of claims 13 to 15, further comprising the engine (27), the battery coolant circuit (L1), a first pump (19), the battery (21), and a first heat exchanger (22),
a first end and a second end of the battery coolant circuit (L1) being respectively connected to the battery heat exchanger third opening (173) and the battery heat exchanger fourth opening (174);
the first pump (19), the battery (21), and the first heat exchanger (22) being connected in series on the battery coolant circuit (L1); and
the first heat exchanger (22) being configured to exchange heat with the engine coolant circuit (L3).

17. The vehicle thermal management system (2000) according to claim 16, further comprising a short circuit branch (L11) and a three-way valve (20),
a first port (201) and a second port (202) of the three-way valve (20) being connected between the first pump (19) and the battery (21), and a third port (203) of the three-way valve (20) being connected to a flow path between the battery (21) and the first heat exchanger (22) through the short circuit branch (L11).

18. The vehicle thermal management system (2000) according to claim 16 or 17, wherein the engine coolant circuit (L3) comprises a first circuit (L31) and a second circuit (L32), and the vehicle thermal management system further comprises a heater core (23), a PTC (24), a second pump (25), and a four-way valve (26);
a first end and a second end of the first circuit (L31) are respectively connected to two ports of the first heat exchanger (22), and the heater core (23), the PTC (24), the second pump (25), and the four-way valve (26) are connected in series on the first circuit (L31); and
the engine (27) is arranged on the second circuit (L32), and a first end and a second end of the second circuit (L32) are respectively connected to other two ports of the four-way valve (26).

19. A vehicle, comprising the vehicle thermal management system (2000) according to any one of claims 13 to 18.
